# EUROPÄISCHE PATENTSCHRIFT

(11) **EP 4 003 772 B1**
(45) Veröffentlichungstag und Bekanntmachung des Hinweises auf die Patenterteilung: **22.10.2025**
(21) Anmeldenummer: 20746918.0
(22) Anmeldetag: 17.07.2020
(51) Int. Cl.: B60K 37/20, B60K 35/22, B60K 35/28, B60K 35/29, B60K 35/215, B60W 50/14

(54) **VERFAHREN ZUM ANZEIGEN EINER WARNMELDUNG**
METHOD FOR DISPLAYING A WARNING
PROCÉDÉ POUR AFFICHER UN MESSAGE D'AVERTISSEMENT

(30) Priorität: 24.07.2019 DE 102019119971
(43) Veröffentlichungstag der Anmeldung: 01.06.2022
(73) Patentinhaber: VOLKSWAGEN AKTIENGESELLSCHAFT, 38440 Wolfsburg (DE)
(72) Erfinder: HEINEMANN, Robert Michael, 38640 Goslar (DE); NEMATI, Issa, 30163 Hannover (DE)
(74) Vertreter: Bals & Vogel Patentanwälte PartGmbB
(86) Internationale Anmeldenummer: PCT/EP2020/070377
(87) Internationale Veröffentlichungsnummer: WO 2021/013762

(56) Entgegenhaltungen:
- EP-A2- 2 562 027
- DE-A1- 10 336 542
- DE-A1- 102017 206 694
- US-A1- 2018 208 076

## Beschreibung

Die vorliegende Erfindung betrifft ein Verfahren sowie ein System zum Anzeigen einer Warnmeldung zur Warnung vor einer eingeschränkten Batterieleistung für den Einsatz in einem Elektrofahrzeug. Ferner betrifft die Erfindung ein Kraftfahrzeug mit einem gattungsgemäßen System.

Die Fahrleistung eines Elektrofahrzeugs hängt maßgeblich von der Zellchemie der verwendeten Hochvoltbatterien sowie der Temperatur ab. Die verfügbare Leistung von Hochvoltbatterien kann dabei bei niedrigen Temperaturen und/oder geringem Energiegehalt teilweise massiv variieren. Dieses Batterieverhalten kann sicherheitsrelevant sein, beispielsweise, wenn ein Fahrer bei niedrigen Temperaturen mit gering geladener Batterie auf eine Autobahn auffährt. Aus diesem Grund ist es sinnvoll einen Fahrer vor solchen Situationen entsprechend zu warnen.

Verfahren und Systeme zur Beobachtung und Kontrolle des Zustandes, insbesondere der Kapazität von Fahrzeugbatterien sind aus dem Stand der Technik, beispielsweise der DE 10 2013 220 015 A1, der US 2017/0254858 A1, der DE 103 36 542 A1, der US 2018/208076 A1, der DE 10 2017 206694 A1 und der EP 2 562 027 A2 bekannt.

Die DE 10 2013 220 015 A1 betrifft ein System und ein Verfahren zum Abschätzen der verfügbaren Kapazität eines Batterieelements in einem Fahrzeug.

Die US 2017/0254858 A1 betrifft ein System und ein Verfahren zur Beobachtung und Kontrolle des Zustandes einer Batterie.

Die aus dem Stand der Technik bekannten Systeme und Verfahren zur Kontrolle eines Zustands einer Fahrzeugbatterie zeigen zwar Warnungen bei ermittelten kritischen Batteriezuständen an, jedoch werden gemäß der bekannten Verfahren und Systeme lediglich die Batteriezustände selbst kontrolliert und nicht etwa eine auf die Batteriezustände zurückzuführende verfügbare Batterieleistung oder andere das Fahrverhalten betreffende Eigenschaften, sodass es für den Fahrer häufig schwierig ist, allein anhand des ermittelten Batteriezustandes zu entscheiden, ob eine Fahrt noch durchgeführt werden kann oder nicht. Insbesondere eine vorausschauende Betrachtung erhält der Fahrer durch die Angabe eines aktuellen Batteriezustandes einer Fahrzeugbatterie nicht. Zudem sind bekannte Verfahren und Systeme zur Warnung eines ermittelten kritischen Batteriezustandes lediglich dauerhaft und nicht nur bei Bedarf im Einsatz, sodass ein Fahrer teilweise unnötigerweise von Warnmeldungen belästigt wird.

Es ist daher die Aufgabe der Erfindung, die voranstehend beschriebenen Nachteile eines Verfahrens bzw. eines Systems zum Anzeigen einer Warnmeldung zur Warnung vor einer eingeschränkten Batterieleistung für den Einsatz in einem Elektrofahrzeug zumindest teilweise zu beheben, insbesondere ist es die Aufgabe der vorliegenden Erfindung, ein Verfahren sowie ein System zur Warnung vor einer eingeschränkten Batterieleistung zur Verfügung zu stellen, die auf besonders einfache und kostengünstige Weise eine möglichst verifizierte, vorausschauende und gleichzeitig benutzerfreundliche Warnung vor einer eingeschränkten Batterieleistung garantieren.

Die voranstehende Aufgabe wird gelöst durch ein Verfahren mit den Merkmalen des Anspruchs 1 sowie ein System gemäß Anspruch 9. Weitere Merkmale und Details ergeben sich aus den Unteransprüchen, der Beschreibung und den Zeichnungen. Technische Merkmale, die zu dem erfindungsgemäßen Verfahren offenbart werden, gelten dabei auch in Verbindung mit dem erfindungsgemäßen System und umgekehrt, sodass bezüglich der Offenbarung zu den einzelnen Erfindungsaspekten stets wechselseitig Bezug genommen wird bzw. werden kann. Zweckmäßige Ausgestaltungen der Erfindung sind in den abhängigen Ansprüchen ausgeführt.

Das gegenständliche Verfahren zum Anzeigen einer Warnmeldung kann vorzugsweise in zumindest teilweise elektrisch betriebenen Fahrzeugen, wie Hybridfahrzeugen oder in vollständig elektrisch betriebenen Fahrzeugen eingesetzt werden. Neben einem Einsatz in Kraftfahrzeugen, wie Personenkraftwagen oder Lastkraftwagen kann das gegenständliche Verfahren hierbei auch in Nutzfahrzeugen, Schiffen oder Flugobjekten eingesetzt werden. Das erfindungsgemäße Verfahren zum Anzeigen einer Warnmeldung zur Warnung vor einer eingeschränkten Batterieleistung für den Einsatz in einem Elektrofahrzeug umfasst hierbei die Schritte eines Erfassens von Messwerten zur Bestimmung einer aktuellen Batterieleistung eines Energiespeichers des Elektrofahrzeugs mittels einer Detektionseinheit, eines Bestimmens der aktuellen Batterieleistung des Energiespeichers auf Basis der erfassten Messwerte mittels einer Verarbeitungseinheit, eines Erfassens von Messwerten zur Bestimmung von fahrzeugspezifischen Parametern mittels einer Detektionseinheit, eines Bestimmens der fahrzeugspezifischen Parameter auf Basis der erfassten Messwerte mittels der Verarbeitungseinheit, eines Bestimmens einer Warnmeldung zur Warnung vor einer eingeschränkten Batterieleistung auf Basis der aktuellen Batterieleistung des Energiespeichers sowie auf Basis der fahrzeugspezifischen Parameter mittels der Verarbeitungseinheit sowie eines Anzeigens der Warnmeldung bei einer eingeschränkten Batterieleistung mittels eines Anzeigemittels, wobei die Warnmeldung die dauerhaft erreichbare maximale Geschwindigkeit ist.

Unter einer dauerhaft erreichbaren maximalen Geschwindigkeit wird im Rahmen der Erfindung hierbei die maximale Durchschnittsgeschwindigkeit verstanden, die ein Fahrzeug unter Berücksichtigung von aktuell bestimmbaren Parametern bis zur vollständigen Entladung bzw. bis zu einer vorbestimmbaren minimalen Ladung erreichen kann. Es versteht sich, dass sich diese momentan vorausschauend bestimmbare maximal erreichbare Geschwindigkeit mit der Änderung von leistungsrelevanten Parametern ebenfalls laufend ändern kann. Das gegenständliche Verfahren zum Anzeigen einer Warnmeldung kann vorteilhafterweise erst bei einem Versuch des Herstellens einer Fahrbereitschaft gestartet werden, weil erst dann eine solche Warnung relevant erscheint. Ein Bestimmen einer aktuellen Batterieleistung des Energiespeichers sowie ein Bestimmen von fahrzeugspezifischen Parametern mittels einer Verarbeitungseinheit kann gegenständlich ferner vorzugsweise die vorläufige Bearbeitung der zur Bestimmung verwendeten erfassten Messwerte umfassen. Dies kann bspw. ein bloßes Mitteln oder Gewichten einzelner Messwerte umfassen, aber auch in Form komplexer Datenauswertungsmethoden erfolgen.

Im Rahmen der Erfindung ist erkannt worden, dass über die gegenständlich vorgesehene Warnung vor einer eingeschränkten Batterieleistung in Form einer dauerhaft erreichbaren maximale Geschwindigkeit, eine besonders benutzerfreundliche und insbesondere vorausschauende Warnung vor einer eingeschränkten Batterieleistung garantiert wird, die eine Geschwindigkeitsprädiktion erlaubt. Aufgrund der gegenständlich vorgesehenen Schritte zur Bestimmung einer eingeschränkten Batterieleistung wird zudem auf besonders verifizierte Art und Weise geprüft, ob ein Fahrvorgang noch durchgeführt werden kann oder nicht.

Im Hinblick auf eine besonders benutzerfreundliche Warnung vor einer eingeschränkten Batterieleistung kann im Rahmen des gegenständlichen Verfahrens insbesondere vorgesehen sein, dass das Verfahren erst bei einem Herstellen einer Fahrbereitschaft gestartet wird, sodass ein Fahrer nur im tatsächlichen Bedarfsfall gewarnt werden kann. Hierbei kann das Herstellen einer Fahrbereitschaft beispielsweise das Kriterium bzw. die notwendige Bedingung sein, dass das erfindungsgemäße Verfahren überhaupt ausgeführt wird. Unter einem Versuch eines Herstellens einer Fahrbereitschaft wird im Rahmen der Erfindung hierbei insbesondere ein Vorgang verstanden, bei dem ein Fahrvorgang eingeleitet werden soll. Ein solcher Vorgang unterscheidet sich demnach vorzugsweise von einem bloßen Anlassen eines Fahrzeugs, bei dem ein Fahrzeug sich nicht bewegen soll.

Im Rahmen einer einfachen und gleichzeitig möglichst exakten Bestimmung einer aktuellen Batterieleistung eines Energiespeichers kann gegenständlich vorteilhafter Weise insbesondere vorgesehen sein, dass das Erfassen von Messwerten zur Bestimmung einer aktuellen Leistung eines Energiespeichers das Erfassen einer aktuellen Spannung und/oder eines aktuellen Stroms und/oder einer aktuellen Temperatur und/oder eines aktuellen Ladezustands und/oder einer aktuellen Bauteiltemperatur und/oder eines aktuellen Energieinhalts umfasst. Ferner können auch zusätzliche Parameter, wie beispielsweise das Alter des Energiespeichers oder dergleichen mit berücksichtigt werden. Im Rahmen einer besonders flexibel anpassbaren Methode können zudem einzelne Parameter, wie beispielsweise die aktuelle Spannung und/oder der aktuelle Strom grundsätzlich bestimmt werden, wohingegen andere Parameter, wie die aktuelle Temperatur oder dergleichen nur im Bedarfsfall, beispielsweise ab Erreichen eines bestimmten Schwellenwertes bestimmt werden können.

Ferner ist es im Rahmen einer möglichst exakten Bestimmung einer dauerhaft erreichbaren maximalen Geschwindigkeit denkbar, dass das Erfassen von Messwerten zur Bestimmung von fahrzeugspezifischen Parametern das Erfassen einer Fahrzeugmasse und/oder eines Fahrzeugluftwiderstandes und/oder eines Wirkungsgrades eines Antriebssystems umfasst. Auch im Rahmen der Bestimmung von fahrzeugspezifischen Parametern können hierbei zusätzliche Parameter, wie das Alter bzw. die Alterung des Energiespeichers bzw. der Batterie oder dergleichen mitberücksichtigt werden, um insbesondere eine Verschlechterung des Batteriewirkungsgrades bzw. der Batterieeffizienz mit zu berücksichtigen.

Im Hinblick auf eine vorausschauende und exakte Bestimmung einer dauerhaft erreichbaren maximalen Geschwindigkeit kann erfindungsgemäß vorteilhafterweise ferner vorgesehen sein, dass das Bestimmen der Warnmeldung das Bestimmen und die Berücksichtigung von Umgebungsdaten umfasst. Umgebungsdaten können hierbei neben einer aktuellen Außentemperatur und einem aktuellen Druck, auch Daten wie die Fahrbahneigenschaften, insbesondere die Reibungseigenschaften der Fahrbahn, die aktuelle Feuchtigkeit der Fahrbahn oder ähnliches sein.

Im Hinblick auf eine vorausschauende und exakte Bestimmung einer dauerhaft erreichbaren maximalen Geschwindigkeit ist es zudem denkbar, dass das Bestimmen der Warnmeldung das Bestimmen und die Berücksichtigung von verkehrsspezifischen Daten umfasst. Die verkehrsspezifischen Daten können hierbei insbesondere Navigationsdaten, Streckendaten oder kartographische Daten umfassen. Ferner können die verkehrsspezifischen Daten auch Daten bzgl. aktueller Verkehrsbedingungen, wie die aktuelle Verkehrsdichte oder dergleichen umfassen. Die verkehrsspezifischen Daten können hierbei vorzugsweise sowohl von einem Navigationssystem des Fahrzeugs zur Ausführung des gegenständlichen Verfahrens, als auch von entfernt vom Fahrzeug angeordneten Sensoren oder Verkehrsdiensten übermittelt werden.

Im Hinblick auf eine dauerhafte Warnung vor einer eingeschränkten Batterieleistung kann gegenständlich ferner vorteilhafter Weise vorgesehen sein, dass das Verfahren während eines Fahrzeugbetriebs zumindest teilweise alternierend, insbesondere in festgelegten und/oder festlegbaren periodischen Abschnitten ausgeführt wird, sodass nicht nur beim Start, sondern auch während des Betriebes eines Fahrzeuges eine Warnmeldung angezeigt wird, sofern die entsprechend definierten Bedingungen erfüllt sind. Die festgelegten und/oder festlegbaren periodischen Abschnitte können hierbei Zeitabschnitte, von beispielsweise 500 ms oder 5 Minuten oder dergleichen sein oder aber auch Längenabschnitte einer zurückgelegten Länge von beispielsweise 5 km, 10 km oder dergleichen. Gemäß einer weiteren Variante kann beispielsweise auch nach einem ersten Ausführen der erfindungsgemäßen Verfahrensschritte jedes Mal neu bestimmt werden, nach welcher Zeit bzw. nach welcher zurückgelegten Strecke ein erneutes Ausführen der gegenständlichen Verfahrensschritte erfolgen soll. Im Gegensatz zu periodisch erfolgenden Verfahrensschritten, können einzelne Verfahrensschritte gegenständlich jedoch auch kontinuierlich bzw. dauerhaft ablaufen.

Im Hinblick auf eine besonders wirksame und effektive Warnung vor einer eingeschränkten Batterieleistung kann gegenständlich vorteilhafter Weise vorgesehen sein, dass die Warnmeldung in Form eines visuellen und/oder akustischen Signals gebildet ist. Eine visuelle Warnmeldung kann hierbei beispielsweise in Form eines Warnsymbols oder eines Warntextes erfolgen. Alternativ oder kumulativ können auch andere Signalformen, wie vibratorische Signale oder dergleichen verwendet werden. Im Rahmen einer besonders effektiven Warnung können hierbei insbesondere mehrere Warnformen, wie beispielsweise eine visuelle und akustische und vibratorische Warnmeldung miteinander kombiniert werden.

Um im Falle einer geringen Batterieleistung auf die noch zur Verfügung stehende Batterieleistung Eingriff nehmen und diese beeinflussen zu können, kann erfindungsgemäß vorteilhafter Weise ferner vorgesehen sein, dass während oder nach einem Anzeigen einer Warnmeldung ein Lösungsvorschlag generiert wird, wobei der Lösungsvorschlag vorzugsweise ein Vorschlag zur Generierung einer höheren dauerhaft erreichbaren maximalen Geschwindigkeit ist. Der Lösungsvorschlag kann hierbei insbesondere Vorschläge zur Anpassung eines momentanen Energieverbrauchs oder auch Vorschläge zur Anpassung des Betriebs von Nebenverbrauchern umfassen. Vorzugsweise kann im Rahmen einer einfachen Ausgestaltung ein Lösungsvorschlag auch ein Anpassen des Betriebes von einem ersten Betriebsmodus in einen zweiten Betriebsmodus beinhalten. Zudem ist es ebenso vorstellbar, dass mehr als zwei Betriebsmodi vorgesehen sein können.

Ebenfalls Gegenstand der Erfindung ist zudem ein System zum Anzeigen einer Warnmeldung zur Warnung vor einer eingeschränkten Batterieleistung für den Einsatz in einem Elektrofahrzeug. Hierbei umfasst das erfindungsgemäße System eine Detektionseinheit zum Erfassen von Messwerten zur Bestimmung einer aktuellen Batterieleistung eines Energiespeichers des Elektrofahrzeugs, eine Detektionseinheit zum Erfassen von Messwerten zur Bestimmung von fahrzeugspezifischen Parametern des Elektrofahrzeugs, eine Verarbeitungseinheit zur Bestimmung einer aktuellen Batterieleistung und von fahrzeugspezifischen Parametern des Energiespeichers auf Basis der erfassten Messwerte sowie zur Bestimmung einer Warnmeldung zur Warnung vor einer eingeschränkten Batterieleistung auf Basis der aktuellen Batterieleistung des Energiespeichers sowie auf Basis der fahrzeugspezifischen Parameter und ein Anzeigemittel zum Anzeigen einer Warnmeldung bei einer eingeschränkten Batterieleistung, wobei die Warnmeldung die dauerhaft erreichbare maximale Geschwindigkeit ist. Die gegenständlichen Detektionseinheiten können vorzugsweise in den Energiespeicher bzw. das Motorsteuergerät integriert sein oder an diesen angeordnet sein. Hierbei können die Detektionseinheiten vorzugsweise eine Sensoreinheit bzw. Sensoren zur Erfassung der Messwerte zur Bestimmung einer aktuellen Batterieleistung bzw. zur Bestimmung von fahrzeugspezifischen Daten aufweisen. Die Sensoren können hierbei unmittelbar an dem System oder bspw. auch entfernt von dem System angeordnet sein.

Im Rahmen einer kompakten und kostengünstigen Ausführung des gegenständlichen Systems kann gegenständlich ferner vorgesehen sein, dass die Verarbeitungseinheit in Form eines Motorsteuergerätes gebildet ist. Das Motorsteuergerät ist ohnehin an den Energiespeicher gekoppelt und somit bereits in der Nähe des Energiespeichers angeordnet, sodass eine einfache und unkomplizierte Datenübertragung möglich ist.

Im Hinblick auf eine einfach integrierbare und gleichzeitig besonders effektive Warnung vor einer geringen Batterieleistung kann gegenständlich vorteilhafter Weise ferner vorgesehen sein, dass das Anzeigemittel in Form eines Instrumentendisplays und/oder eines Kombi-Instrumentes und/oder eines Headup-Displays gebildet ist. Ebenso ist auch eine Ausführung des gegenständlichen Anzeigeelementes in Form eines entfernt vom Lenkrad angeordneten kapazitiven Displays oder dergleichen denkbar. Im Hinblick auf eine besonders wirksame Warnung ist es zudem vorstellbar, dass mehrere der genannten Anzeigeformen verwendet werden und somit mehrere Anzeigemittel innerhalb eines Fahrzeugs gleichzeitig zum Einsatz kommen.

Ebenfalls Gegenstand Erfindung ist ferner ein Kraftfahrzeug, umfassend ein voranstehend beschriebenes System zum Anzeigen einer Warnmeldung zur Warnung vor einer eingeschränkten Batterieleistung.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

Es zeigen:
- Fig. 1: eine schematische Darstellung der einzelnen Schritte eines erfindungsgemäßen Verfahrens zum Anzeigen einer Warnmeldung zur Warnung vor einer eingeschränkten Batterieleistung für den Einsatz in einem Elektrofahrzeug,
- Fig. 2: eine schematische Darstellung der einzelnen wesentlichen Komponenten eines erfindungsgemäßen Systems zum Anzeigen einer Warnmeldung zur Warnung vor einer eingeschränkten Batterieleistung für den Einsatz in einem Elektrofahrzeug,
- Fig. 3: eine schematische Darstellung des Innenraums eines Kraftfahrzeugs, in dem das erfindungsgemäße Verfahren zum Anzeigen einer Warnmeldung ausgeführt wird.

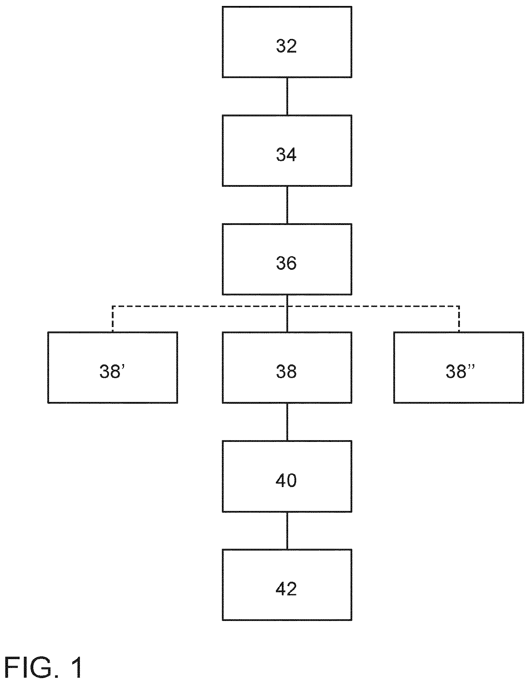

Fig. 1 zeigt eine schematische Darstellung der einzelnen Schritte eines erfindungsgemäßen Verfahrens zum Anzeigen einer Warnmeldung 4 zur Warnung vor einer eingeschränkten Batterieleistung.

Hierbei umfasst das gegenständliche Verfahren die Schritte eines Erfassens (32) von Messwerten zur Bestimmung einer aktuellen Batterieleistung eines Energiespeichers des Elektrofahrzeugs mittels einer Detektionseinheit (24), eines Bestimmens (34) einer aktuellen Batterieleistung des Energiespeichers auf Basis der erfassten Messwerte mittels einer Verarbeitungseinheit (22), eines Erfassens (36) von Messwerten zur Bestimmung von fahrzeugspezifischen Parametern mittels einer Detektionseinheit (26), eines Bestimmens (38) von fahrzeugspezifischen Parametern auf Basis der erfassten Messwerte mittels der Verarbeitungseinheit (22), eines Bestimmens (40) einer Warnmeldung (4) zur Warnung vor einer eingeschränkten Batterieleistung auf Basis der aktuellen Batterieleistung des Energiespeichers sowie auf Basis der fahrzeugspezifischen Parameter mittels der Verarbeitungseinheit (22) sowie eines Anzeigens (42) der Warnmeldung (4) bei einer eingeschränkten Batterieleistung mittels eines Anzeigemittels (14) wobei die Warnmeldung (4) die dauerhaft erreichbare maximale Geschwindigkeit ist. Im Hinblick auf eine vorausschauende und exakte Bestimmung einer dauerhaft erreichbaren maximalen Geschwindigkeit kann erfindungsgemäß vorzugsweise zusätzlich der Schritt eines Bestimmens (38') und der Berücksichtigung von Umgebungsdaten sowie der Schritt eines Bestimmens (38") und der Berücksichtigung von verkehrsspezifischen Daten vorgesehen sein, um eine Warnmeldung zusätzlich auf Basis dieser Daten bestimmen zu können.

Der Schritt eines Erfassens 32 von Messwerten zur Bestimmung einer aktuellen Leistung eines Energiespeichers kann gegenständlich insbesondere das Erfassen einer aktuellen Spannung und/oder eines aktuellen Stroms und/oder einer aktuellen Temperatur und/oder eines aktuellen Ladezustands und/oder einer aktuellen Bauteiltemperatur und/oder eines aktuellen Energieinhalts umfassen.

Der Schritt eines Erfassens 36 von Messwerten zur Bestimmung von fahrzeugspezifischen Parametern kann gegenständlich zudem insbesondere das Erfassen einer Fahrzeugmasse und/oder eines Fahrzeugluftwiderstandes und/oder eines Wirkungsgrades eines Antriebssystems umfassen.

Die gemäß dem Schritt 42 angezeigte Warnmeldung 4 kann zudem in Form eines visuellen und/oder akustischen Signals, aber auch in Form anderer Signalformen, wie beispielsweise vibratorischen Signalen oder dergleichen erfolgen. Im Rahmen einer besonders effektiven Warnung können ferner auch mehrere Warnformen miteinander kombiniert werden.

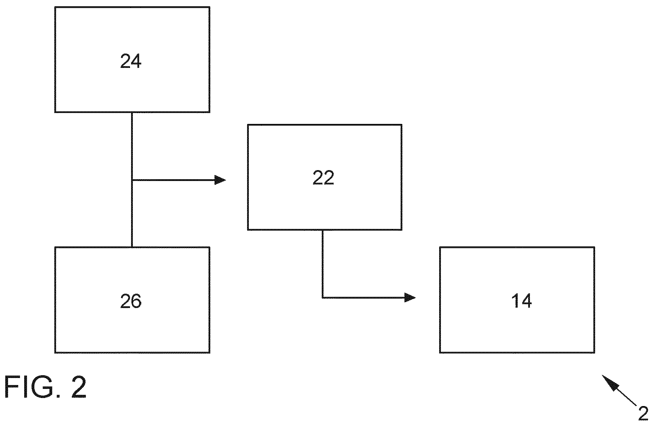

Fig. 2 zeigt eine schematische Darstellung der einzelnen wesentlichen Komponenten eines erfindungsgemäßen Systems 2 zum Anzeigen einer Warnmeldung 4 zur Warnung vor einer eingeschränkten Batterieleistung. Hierbei umfasst das gegenständliche System 2 eine Detektionseinheit 24 zum Erfassen 32 von Messwerten zur Bestimmung einer aktuellen Batterieleistung eines Energiespeichers des Elektrofahrzeugs, eine Detektionseinheit 26 zum Erfassen 36 von Messwerten zur Bestimmung von fahrzeugspezifischen Parametern des Elektrofahrzeugs, eine Verarbeitungseinheit 22 zur Bestimmung der aktuellen Batterieleistung und der fahrzeugspezifischen Parametern des Energiespeichers auf Basis der erfassten Messwerte sowie zur Bestimmung einer Warnmeldung 4 zur Warnung vor einer eingeschränkten Batterieleistung auf Basis der aktuellen Batterieleistung des Energiespeichers sowie auf Basis der fahrzeugspezifischen Parameter und ein Anzeigemittel 4 zum Anzeigen 40 einer Warnmeldung 4 bei einer eingeschränkten Batterieleistung, wobei die Warnmeldung 4 die dauerhaft erreichbare maximale Geschwindigkeit ist.

Im Rahmen eines möglichst effektiven Informationsaustausches können die einzelnen Komponenten des gegenständlichen Systems 2 vorteilhafter Weise mittels einer hier nicht dargestellten Steuerleitung miteinander verbunden sein. Im Rahmen einer möglichst flexiblen und einfach integrierbaren Ausführung des gegenständlichen Systems 2 können die einzelnen Komponenten alternativ auch drahtlos bzw. kontaktlos miteinander über Bluetooth, WLAN, Zigbee, oder dergleichen kommunizieren.

Im Rahmen einer kompakten und kostengünstigen Ausführung des gegenständlichen Systems 2 kann die Verarbeitungseinheit 22, insbesondere in Form eines Motorsteuergerätes gebildet sein, das ohnehin an den Energiespeicher gekoppelt und somit bereits in der Nähe des Energiespeichers angeordnet ist, sodass eine einfache und unkomplizierte Datenübertragung möglich ist.

Das Anzeigemittel 14 kann erfindungsgemäß insbesondere in Form eines Instrumentendisplays und/oder eines Kombi-Instrumentes und/oder eines Headup-Displays oder dergleichen gebildet sein. Ebenso ist es auch möglich, dass das gegenständliche Anzeigemittel in Form eines entfernt vom Lenkrad angeordneten kapazitiven Displays oder dergleichen gebildet ist. Im Hinblick auf eine besonders wirksame Warnung ist es zudem vorstellbar, dass mehrere der genannten Anzeigeformen verwendet werden und somit mehrere Anzeigemittel 14 innerhalb eines Fahrzeugs gleichzeitig zum Einsatz kommen.

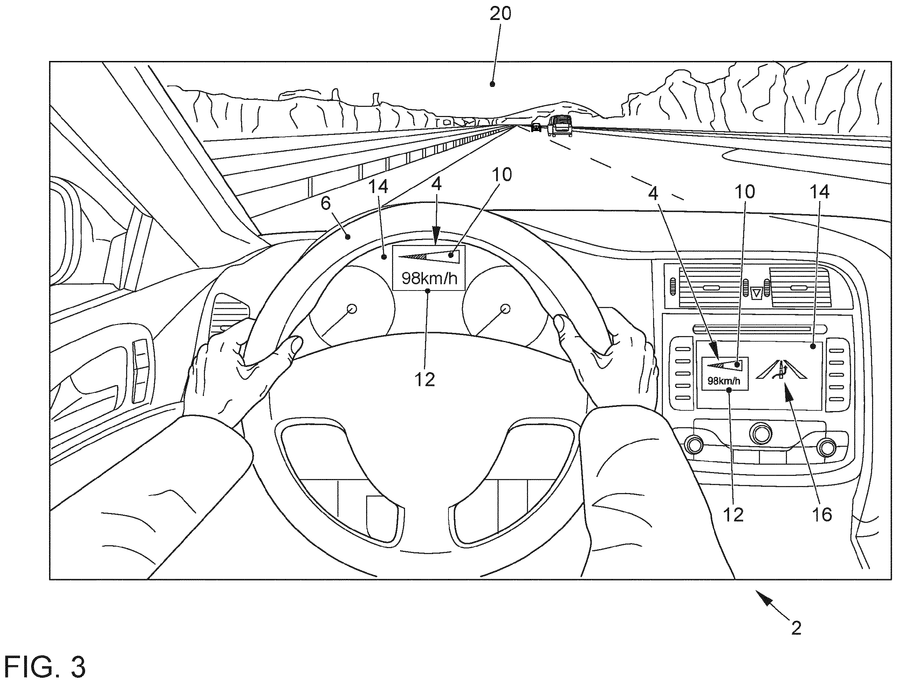

Fig. 3 zeigt eine schematische Darstellung des Innenraums eines Kraftfahrzeugs, in dem das erfindungsgemäße Verfahren zum Anzeigen einer Warnmeldung 4 zur Warnung vor einer eingeschränkten Batterieleistung ausgeführt wird.

Hierbei wird die Warnmeldung 4, die vorliegend in Form eines Warnsymbols 10 sowie eines Warntextes 12 gebildet ist, einem Fahrer sowohl an einem in der Nähe des Lenkrads 6 angeordneten Kombi-Instrument sowie über ein entfernt vom Lenkrad 6 angeordnetes kapazitives Display angezeigt. Auf dem kapazitiven Display ist ferner zu erkennen, dass eine weitere Meldung 16 dargestellt ist, die beispielsweise eine weitere Warnmeldung oder auch ein betreffend die Warnmeldung 4 vorgesehener Lösungsvorschlag sein kann.

Mittels des erfindungsgemäßen Verfahrens sowie des Systems 2 zum Anzeigen einer Warnmeldung 4 zur Warnung vor einer eingeschränkten Batterieleistung ist es insbesondere möglich, über die gegenständlich vorgesehene Warnung vor einer eingeschränkten Batterieleistung in Form einer dauerhaft erreichbaren maximale Geschwindigkeit, eine besonders benutzerfreundliche und insbesondere vorausschauende Warnung vor einer eingeschränkten Batterieleistung zu gewährleisten, die eine Geschwindigkeitsprädiktion erlaubt. Aufgrund der gegenständlich vorgesehenen Schritte zur Bestimmung einer eingeschränkten Batterieleistung wird zudem auf besonders verifizierte Art und Weise geprüft, ob ein Fahrvorgang noch durchgeführt werden kann oder nicht.

### Bezugszeichenliste

- 2: System zum Anzeigen einer Warnmeldung
- 4: Warnmeldung
- 6: Lenkrad
- 10: Warnsymbol
- 12: Warntext
- 14: Anzeigemittel
- 16: weitere Meldung
- 20: Windschutzscheibe
- 22: Verarbeitungseinheit
- 24: Detektionseinheit
- 26: Detektionseinheit

- 32: Erfassen von Messwerten zur Bestimmung einer aktuellen Batterieleistung
- 34: Bestimmen einer aktuellen Batterieleistung
- 36: Erfassen von Messwerten zur Bestimmung von fahrzeugspezifischen Parametern
- 38: Bestimmen von fahrzeugspezifischen Parametern
- 38': Bestimmen von Umgebungsdaten
- 38": Bestimmen von verkehrsspezifischen Daten
- 40: Bestimmen einer Warnmeldung
- 42: Anzeigen einer Warnmeldung

## Patentansprüche

1. Verfahren zum Anzeigen einer Warnmeldung (4) zur Warnung vor einer eingeschränkten Batterieleistung für den Einsatz in einem Elektrofahrzeug, umfassend die Schritte:
- Erfassen (32) von Messwerten zur Bestimmung einer aktuellen Batterieleistung eines Energiespeichers des Elektrofahrzeugs mittels einer Detektionseinheit (24),
- Bestimmen (34) einer aktuellen Batterieleistung des Energiespeichers auf Basis der erfassten Messwerte mittels einer Verarbeitungseinheit (22),
- Erfassen (36) von Messwerten zur Bestimmung von fahrzeugspezifischen Parametern mittels einer Detektionseinheit (26),
- Bestimmen (38) von fahrzeugspezifischen Parametern auf Basis der erfassten Messwerte mittels der Verarbeitungseinheit (22),
- Bestimmen (40) einer Warnmeldung (4) zur Warnung vor einer eingeschränkten Batterieleistung auf Basis der aktuellen Batterieleistung des Energiespeichers sowie auf Basis der fahrzeugspezifischen Parameter mittels der Verarbeitungseinheit (22),
- Anzeigen (42) der Warnmeldung (4) bei einer eingeschränkten Batterieleistung mittels eines Anzeigemittels (14),
**dadurch gekennzeichnet,**
**dass** die Warnmeldung (4) die dauerhaft erreichbare maximale Geschwindigkeit ist, wobei unter der dauerhaft erreichbaren maximalen Geschwindigkeit die maximale Durchschnittsgeschwindigkeit verstanden wird, die ein Fahrzeug unter Berücksichtigung von aktuell bestimmbaren Parametern bis zur vollständigen Entladung bzw. bis zu einer vorbestimmbaren minimalen Ladung erreichen kann.

2. Verfahren nach Anspruch 1,
**dadurch gekennzeichnet,**
**dass** das Erfassen (32) von Messwerten zur Bestimmung einer aktuellen Batterieleistung eines Energiespeichers das Erfassen einer aktuellen Spannung und/oder eines aktuellen Stroms und/oder einer aktuellen Temperatur und/oder eines aktuellen Ladezustands und/oder einer aktuellen Bauteiltemperatur und/oder eines aktuellen Energieinhalts umfasst.

3. Verfahren nach Anspruch 1 oder 2,
**dadurch gekennzeichnet,**
**dass** das Erfassen (36) von Messwerten zur Bestimmung von fahrzeugspezifischen Parametern das Erfassen einer Fahrzeugmasse und/oder eines Fahrzeugluftwiderstandes und/oder eines Wirkungsgrades eines Antriebssystems umfasst.

4. Verfahren nach einem der vorangehenden Ansprüche,
**dadurch gekennzeichnet,**
**dass** das Bestimmen (40) der Warnmeldung (4) das Bestimmen (38') und die Berücksichtigung von Umgebungsdaten umfasst.

5. Verfahren nach einem der vorangehenden Ansprüche,
**dadurch gekennzeichnet,**
**dass** das Bestimmen (40) der Warnmeldung (4) das Bestimmen (38") und die Berücksichtigung von verkehrsspezifischen Daten umfasst.

6. Verfahren nach einem der vorangehenden Ansprüche,
**dadurch gekennzeichnet,**
**dass** das Verfahren während eines Fahrzeugbetriebs zumindest teilweise alternierend ausgeführt wird, wobei das Verfahren vorzugsweise in festgelegten und/oder festlegbaren periodischen Abschnitten ausgeführt wird.

7. Verfahren nach einem der vorangehenden Ansprüche,
**dadurch gekennzeichnet,**
**dass** die Warnmeldung (4) in Form eines visuellen und/oder akustischen Signals gebildet ist.

8. Verfahren nach einem der vorangehenden Ansprüche,
**dadurch gekennzeichnet,**
**dass** während oder nach einem Anzeigen einer Warnmeldung (4) ein Lösungsvorschlag generiert wird, wobei der Lösungsvorschlag vorzugsweise ein Vorschlag zur Generierung einer höheren maximal erreichbaren Geschwindigkeit ist, wobei der Lösungsvorschlag insbesondere Vorschläge zur Anpassung eines momentanen Energieverbrauchs oder auch Vorschläge zur Anpassung des Betriebs von Nebenverbrauchern umfassen kann oder ein Anpassen des Betriebes von einem ersten Betriebsmodus in einen zweiten Betriebsmodus beinhalten kann, wobei es vorstellbar sein kann, dass mehr als zwei Betriebsmodi vorgesehen sind.

9. System zum Anzeigen einer Warnmeldung (4) zur Warnung vor einer eingeschränkten Batterieleistung für den Einsatz in einem Elektrofahrzeug, insbesondere zur Ausführung eines Verfahrens nach einem der Ansprüche 1 bis 8, umfassend:
- eine Detektionseinheit (24) zum Erfassen (32) von Messwerten zur Bestimmung einer aktuellen Batterieleistung eines Energiespeichers des Elektrofahrzeugs,
- eine Detektionseinheit (26) zum Erfassen (36) von Messwerten zur Bestimmung von fahrzeugspezifischen Parametern des Elektrofahrzeugs,
- eine Verarbeitungseinheit (22) zur Bestimmung einer aktuellen Batterieleistung und von fahrzeugspezifischen Parametern des Energiespeichers auf Basis der erfassten Messwerte sowie zur Bestimmung einer Warnmeldung (4) zur Warnung vor einer eingeschränkten Batterieleistung auf Basis der aktuellen Batterieleistung des Energiespeichers sowie auf Basis der fahrzeugspezifischen Parameter,
- ein Anzeigemittel (4) zum Anzeigen (40) einer Warnmeldung (4) bei einer eingeschränkten Batterieleistung, wobei die Warnmeldung (4) die dauerhaft erreichbare maximale Geschwindigkeit ist, wobei unter der dauerhaft erreichbaren maximalen Geschwindigkeit die maximale Durchschnittsgeschwindigkeit verstanden wird, die ein Fahrzeug unter Berücksichtigung von aktuell bestimmbaren Parametern bis zur vollständigen Entladung bzw. bis zu einer vorbestimmbaren minimalen Ladung erreichen kann.

10. System nach Anspruch 9,
**dadurch gekennzeichnet,**
**dass** die Verarbeitungseinheit (22) in Form eines Motorsteuergerätes gebildet ist.

11. System nach Anspruch 9 oder 10,
**dadurch gekennzeichnet,**
**dass** das Anzeigemittel (14) in Form eines Instrumentendisplays und/oder eines Kombi-Instrumentes und/oder ein Head-Up Displays gebildet ist.

## Claims

1. Method for displaying a warning message (4) to warn of limited battery power for use in an electric vehicle, comprising the steps of:
- detecting (32) measured values for determining a current battery power of an energy storage device of the electric vehicle by means of a detection unit (24),
- determining (34) a current battery power of the energy storage device on the basis of the detected measured values by means of a processing unit (22),
- detecting (36) measured values for determining vehicle-specific parameters by means of a detection unit (26),
- determining (38) vehicle-specific parameters on the basis of the detected measured values by means of the processing unit (22),
- determining (40) a warning message (4) to warn of limited battery power on the basis of the current battery power of the energy storage device and on the basis of the vehicle-specific parameters by means of the processing unit (22),
- displaying (42) the warning message (4) in the event of limited battery power by means of a display means (14),
**characterized in that**
the warning message (4) is the sustainably achievable maximum speed, the sustainably achievable maximum speed being understood to be the maximum average speed that a vehicle can reach, taking into account currently determinable parameters, until complete discharge or a predeterminable minimum charge.

2. Method according to claim 1,
**characterized in that**
detecting (32) measured values for determining a current battery power of an energy storage device comprises detecting a current voltage and/or a current electric current and/or a current temperature and/or a current state of charge and/or a current component temperature and/or a current energy content.

3. Method according to claim 1 or 2,
**characterized in that**
detecting (36) measured values for determining vehicle-specific parameters comprises detecting a vehicle mass and/or a vehicle air resistance and/or a degree of efficiency of a drive system.

4. Method according to any of the preceding claims,
**characterized in that**
determining (40) the warning message (4) comprises determining (38') and taking into account environmental data.

5. Method according to any of the preceding claims,
**characterized in that**
determining (40) the warning message (4) comprises determining (38") and taking into account traffic-specific data.

6. Method according to any of the preceding claims,
**characterized in that**
the method is carried out at least partially alternately during vehicle operation, the method preferably being carried out in fixed and/or definable periodic portions.

7. Method according to any of the preceding claims,
**characterized in that**
the warning message (4) is in the form of a visual and/or acoustic signal.

8. Method according to any of the preceding claims,
**characterized in that**
during or after displaying a warning message (4), a proposed solution is generated, the proposed solution preferably being a recommendation to generate a higher maximum achievable speed, it being possible for the proposed solution to in particular comprise recommendations to adapt a current energy consumption or recommendations to adapt the operation of auxiliary consumers, or to include adjusting the operation from a first operating mode to a second operating mode, it being conceivable that more than two operating modes are provided.

9. System for displaying a warning message (4) to warn of limited battery power for use in an electric vehicle, in particular for carrying out a method according to any of claims 1 to 8, comprising:
- a detection unit (24) for detecting (32) measured values for determining a current battery power of an energy storage device of the electric vehicle,
- a detection unit (26) for detecting (36) measured values for determining vehicle-specific parameters of the electric vehicle,
- a processing unit (22) for determining a current battery power and vehicle-specific parameters of the energy storage device on the basis of the detected measured values, and for determining a warning message (4) to warn of limited battery power on the basis of the current battery power of the energy storage device and on the basis of the vehicle-specific parameters,
- a display means (4) for displaying (40) a warning message (4) in the event of limited battery power, wherein the warning message (4) is the sustainably achievable maximum speed, wherein the sustainably achievable maximum speed is understood to be the maximum average speed that a vehicle can reach, taking into account currently determinable parameters, until complete discharge or until a predeterminable minimum charge.

10. System according to claim 9,
**characterized in that**
the processing unit (22) is in the form of an engine control unit.

11. System according to claim 9 or 10,
**characterized in that**
the display means (14) is in the form of an instrument display and/or an instrument cluster and/or a head-up display.

## Revendications

1. Procédé permettant l'affichage d'un message d'avertissement (4) pour l'avertissement d'une puissance de batterie limitée pour l'utilisation dans un véhicule électrique, comprenant les étapes consistant à :
- acquérir (32) des valeurs de mesure pour la détermination d'une puissance de batterie actuelle d'un accumulateur d'énergie du véhicule électrique à l'aide d'une unité de détection (24),
- déterminer (34) une puissance de batterie actuelle de l'accumulateur d'énergie sur la base des valeurs de mesure acquises à l'aide d'une unité de traitement (22),
- acquérir (36) des valeurs de mesure pour la détermination de paramètres spécifiques au véhicule à l'aide d'une unité de détection (26),
- déterminer (38) des paramètres spécifiques au véhicule sur la base des valeurs de mesure acquises à l'aide de l'unité de traitement (22),
- déterminer (40) un message d'avertissement (4) pour l'avertissement d'une puissance de batterie limitée sur la base de la puissance de batterie actuelle de l'accumulateur d'énergie ainsi que sur la base des paramètres spécifiques au véhicule à l'aide de l'unité de traitement (22),
- afficher (42) le message d'avertissement (4) en cas de puissance de batterie limitée à l'aide d'un moyen d'affichage (14),
**caractérisé en ce que**
le message d'avertissement (4) est la vitesse maximale pouvant être atteinte durablement, dans lequel la vitesse maximale pouvant être atteinte durablement est entendue comme la vitesse moyenne maximale qu'un véhicule peut atteindre, en tenant compte de paramètres pouvant être déterminés actuellement, jusqu'à la décharge complète ou jusqu'à une charge minimale pouvant être prédéterminée.

2. Procédé selon la revendication 1,
**caractérisé en ce que**
l'acquisition (32) de valeurs de mesure pour la détermination d'une puissance de batterie actuelle d'un accumulateur d'énergie comprend l'acquisition d'une tension actuelle et/ou d'un courant actuel et/ou d'une température actuelle et/ou d'un état de charge actuel et/ou d'une température de composant actuelle et/ou d'un contenu énergétique actuel.

3. Procédé selon la revendication 1 ou 2,
**caractérisé en ce que**
l'acquisition (36) de valeurs de mesure pour la détermination de paramètres spécifiques au véhicule comprend l'acquisition d'une masse du véhicule et/ou d'une résistance à l'air du véhicule et/ou d'un rendement d'un système d'entraînement.

4. Procédé selon l'une des revendications précédentes,
**caractérisé en ce que**
la détermination (40) du message d'avertissement (4) comprend la détermination (38') et la prise en compte de données d'environnement.

5. Procédé selon l'une des revendications précédentes,
**caractérisé en ce que**
la détermination (40) du message d'avertissement (4) comprend la détermination (38") et la prise en compte de données spécifiques à la circulation.

6. Procédé selon l'une des revendications précédentes,
**caractérisé en ce que**
le procédé est exécuté au moins partiellement en alternance pendant le fonctionnement d'un véhicule, dans lequel le procédé est de préférence exécuté dans des sections périodiques établies et/ou pouvant être établies.

7. Procédé selon l'une des revendications précédentes,
**caractérisé en ce que**
le message d'avertissement (4) est formé sous la forme d'un signal visuel et/ou acoustique.

8. Procédé selon l'une des revendications précédentes,
**caractérisé en ce que,**
pendant ou après un affichage d'un message d'avertissement (4), une proposition de solution est générée, dans lequel la proposition de solution est de préférence une proposition pour la génération d'une vitesse maximale pouvant être atteinte plus élevée, dans lequel la proposition de solution peut comprendre en particulier des propositions pour l'adaptation d'une consommation d'énergie momentanée ou également des propositions pour l'adaptation du fonctionnement de consommateurs secondaires ou peut comprendre une adaptation du fonctionnement d'un premier mode de fonctionnement à un second mode de fonctionnement, dans lequel il peut être concevable que plus de deux modes de fonctionnement soient prévus.

9. Système permettant l'affichage d'un message d'avertissement (4) pour l'avertissement d'une puissance de batterie limitée pour l'utilisation dans un véhicule électrique, en particulier pour l'exécution d'un procédé selon l'une des revendications 1 à 8, comprenant :
- une unité de détection (24) pour l'acquisition (32) de valeurs de mesure pour la détermination d'une puissance de batterie actuelle d'un accumulateur d'énergie du véhicule électrique,
- une unité de détection (26) pour l'acquisition (36) de valeurs de mesure pour la détermination de paramètres spécifiques au véhicule du véhicule électrique,
- une unité de traitement (22) pour la détermination d'une puissance de batterie actuelle et de paramètres spécifiques au véhicule de l'accumulateur d'énergie sur la base des valeurs de mesure acquises ainsi que pour la détermination d'un message d'avertissement (4) pour l'avertissement d'une puissance de batterie limitée sur la base de la puissance de batterie actuelle de l'accumulateur d'énergie ainsi que sur la base des paramètres spécifiques au véhicule,
- un moyen d'affichage (4) pour l'affichage (40) d'un message d'avertissement (4) lorsque la puissance de la batterie est limitée, dans lequel le message d'avertissement (4) est la vitesse maximale pouvant être atteinte durablement, dans lequel la vitesse maximale pouvant être atteinte durablement est la vitesse moyenne maximale qu'un véhicule peut atteindre jusqu'à la décharge complète ou jusqu'à une charge minimale pouvant être prédéterminée, en tenant compte de paramètres pouvant être déterminés actuellement.

10. Système selon la revendication 9,
**caractérisé en ce que**
l'unité de traitement (22) est formée sous la forme d'un appareil de commande de moteur.

11. Système selon la revendication 9 ou 10,
**caractérisé en ce que**
le moyen d'affichage (14) est formé sous la forme d'un affichage d'instrument et/ou d'un instrument combiné et/ou d'un affichage tête haute.
